# EUROPEAN PATENT APPLICATION

(11) **EP 3 957 198 A1**
(43) Date of publication of application: **23.02.2022**
(21) Application number: 19925252.9
(22) Date of filing: 18.04.2019
(51) Int. Cl.: A24F 47/00, A24D 1/04

(54) **HEATED TOBACCO PRODUCT**

(71) Applicant: Japan Tobacco Inc., Tokyo 105-6927 (JP)
(72) Inventor: SENDO, Makoto, Tokyo 130-8603 (JP); UEMATSU, Hiromi, Tokyo 130-8603 (JP); TOKITSU, Naohiro, Tokyo 130-8603 (JP); YAMAMICHI, Keiji, Tokyo 130-8603 (JP); MANABE, Tetsuya, Tokyo 130-8603 (JP)
(74) Representative: Hoffmann Eitle
(86) International application number: PCT/JP2019/016675
(87) International publication number: WO 2020/213137

(57) **Abstract**

Provided is a feature that, during storage of a heated tobacco product having a tobacco rod formed by filling the inside of wrapping paper with a tobacco filler containing a tobacco raw material and an aerosol-source material, suppresses occlusion of a heater-insertion cavity open on the distal end surface side of the tobacco rod. This heated tobacco product has a tobacco rod formed by filling the inside of wrapping paper with a tobacco filler containing cut tobacco and an aerosol-source material, and is provided with: a heater-insertion cavity that is open on the distal end surface side of the tobacco rod and extends in the axial direction of the tobacco rod, and into which a heater of a heating device is inserted; and a coating layer that is formed on the lateral periphery of the heater-insertion cavity of the tobacco rod, and suppresses occlusion of the heater-insertion cavity.

## Description

### Technical Field

The present invention relates to a heated tobacco product.

### Background Art

Known heated tobacco products have a tobacco rod formed by filling the space inside wrapping paper with a tobacco filler, the tobacco filler including a tobacco raw material (e.g., tobacco shreds, tobacco granules, or a shaped tobacco sheet material) and an aerosol-source material (such as glycerin or propylene glycol) (see, for example, Patent Document 1). With heated tobacco products of this type, the tobacco filler is heated rather than combusted by use of an electric heater of a heating device, and an aerosol generated by the tobacco filler is delivered to the user of the heated tobacco product. As such an electric heater, heaters of various shapes such as a blade shape or a rod shape have been commercialized. In use, the electric heater is inserted into the tobacco rod from the distal end face of the tobacco rod to thereby attach the tobacco rod to the heating device.

### Citation List

### Patent Document

Patent Document 1: Japanese Patent No. 5920744
Patent Document 2: Japanese Patent No. 5348648

### Summary of Invention

### Technical Problem

In inserting the tobacco rod into the electric heater, one conceivable way to reduce the resistance encountered during insertion of the electric heater is to provide the tobacco rod with a pre-formed heater-insertion cavity that is open near the distal end face of the tobacco rod and extends in the axial direction of the tobacco rod. In this regard, the tobacco filler constituting the tobacco rod is an elastic body rather than a plastic body. Accordingly, simply boring the heater-insertion cavity from the distal end face of the tobacco rod may potentially have a problem described below. That is, immediately after the boring, the tobacco filler begins to elastically deform in a direction that causes the heater-insertion cavity to close. This may cause, for example, the heater-insertion cavity of the tobacco rod to eventually close if the heated tobacco product is left in storage for an extended period of time.

The present invention has been made in view of the above-mentioned circumstances. Accordingly, it is an object of the present invention to provide a technique for use in a heated tobacco product having a tobacco rod formed by filling the space inside wrapping paper with a tobacco filler including a tobacco raw material and an aerosol-source material, the technique being designed to prevent or inhibit a heater-insertion cavity provided near the distal end face of the tobacco rod from closing while the heated tobacco product is left in storage.

### Solution to Problem

To address the above-mentioned problem, according to the present invention, there is provided a heated tobacco product having a tobacco rod formed by filling a space inside wrapping paper with a tobacco filler that includes a tobacco raw material and an aerosol-source material. The heated tobacco product includes a heater-insertion cavity, and a coating layer. The heater-insertion cavity receives a heater inserted into the heater-insertion cavity. The heater is a heater of a heating device. The heater-insertion cavity is open near a distal end face of the tobacco rod, and extends in an axial direction of the tobacco rod. The coating layer is provided beside and around the heater-insertion cavity of the tobacco rod to prevent or inhibit closing of the heater-insertion cavity.

In another example, the coating layer may include calcium carbonate or sodium silicate.

In another example, the coating layer may include a coating agent in an amount of greater than or equal to 5 mg and less than or equal to 60 mg.

In another example, the coating layer may cover greater than or equal to 30% and less than or equal to 100% of a wall of the heater-insertion cavity.

In another example, the heated tobacco product may have a filter coaxially coupled to a portion of the tobacco rod located near a proximal end of the tobacco rod, and the filter may include a cooling part to cool a volatile substance released from the aerosol-source material included in the tobacco filler.

In another example, the filter may include a support part. The support part is disposed at a connection end of the filter to prevent or inhibit the tobacco filler from being pushed toward a mouth end of the filter upon insertion of the heater into the heater-insertion cavity. The connection end is an end connected to a portion of the tobacco rod located near the proximal end of the tobacco rod.

In another example, the filter may include a mouthpiece part disposed near the mouth end of the filter.

### Advantageous Effects of Invention

The present invention makes it possible to provide a technique for use in a heated tobacco product having a tobacco rod formed by filling the space inside wrapping paper with a tobacco filler including a tobacco raw material and an aerosol-source material, the technique being designed to prevent or inhibit a heater-insertion cavity provided near the distal end face of the tobacco rod from closing while the heated tobacco product is left in storage.

### Brief Description of Drawings

[Fig. 1] Fig. 1 schematically illustrates the internal structure of a heated tobacco product according to Embodiment 1.
[Fig. 2] Fig. 2 illustrates a tobacco rod of a heated tobacco product in detail.
[Fig. 3] Fig. 3 is a schematic diagram of a heating device for which a heated tobacco product is to be used.
[Fig. 4] Fig. 4 illustrates an electric heater inserted into a tobacco rod to a specified depth as the tobacco rod is attached into an accommodating cavity of a heating device.
[Fig. 5] Fig. 5 illustrates a tobacco rod according to a first modification.
[Fig. 6] Fig. 6 illustrates the tobacco rod according to the first modification when attached into an accommodating cavity of a heating device.
[Fig. 7] Fig. 7 illustrates a tobacco rod according to a second modification.
[Fig. 8] Fig. 8 illustrates the tobacco rod according to the second modification when attached into an accommodating cavity of a heating device.
[Fig. 9A] Fig. 9A illustrates a heater-insertion cavity according to a third modification.
[Fig. 9B] Fig. 9B illustrates a heater-insertion cavity according to a fourth modification.
[Fig. 9C] Fig. 9C illustrates a heater-insertion cavity according to a fifth modification.

### Description of Embodiments

A heated tobacco product according to embodiments of the present invention is described below with reference to the drawings. The dimensions, materials, shapes, relative arrangement, and other features of components described below in connection with the embodiments are, unless expressly stated otherwise, not intended to limit the technical scope of the present invention to the particular features described.

### <Embodiment 1>

### [Heated Tobacco Product]

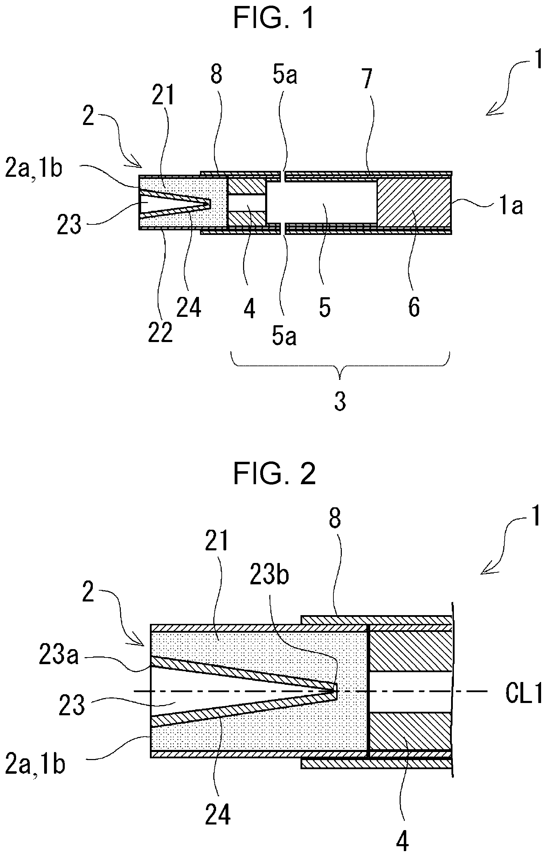

Fig. 1 schematically illustrates the internal structure of a heated tobacco product 1 according to Embodiment 1. The heated tobacco product 1 is a type of tobacco product designed to heat a tobacco filler without combustion, and deliver an aerosol generated by the tobacco filler to the user of the heated tobacco product 1.

The heated tobacco product 1 includes a tobacco rod 2 and a filter 3, which are arranged in coaxial alignment with each other. The heated tobacco product 1 has a mouth end 1a that the user inserts into the user's mouth during use of the heated tobacco product 1, and a distal end 1b located at an end opposite to the mouth end 1a. The filter 3 has a support part 4, a cooling part 5, and a mouthpiece part 6, which are in coaxial alignment with each other and disposed in the stated order as viewed from the distal end of the filter 3. The support part 4, the cooling part 5, and the mouthpiece part 6 of the filter 3 are integrally wrapped by a filter wrap 7. Further, the tobacco rod 2 and the filter 3 are integrally coupled to each other by being wrapped by tipping paper 8.

During use of the heated tobacco product 1, air is drawn in by the user from the distal end 1b to the mouth end 1a through the heated tobacco product 1. The distal end 1b of the heated tobacco product 1 can be regarded as the distal end or upstream end of the tobacco rod 2, and the mouth end 1a of the heated tobacco product 1 can be regarded as the rear end or downstream end of the mouthpiece part 6.

The tobacco rod 2 is disposed at the distal end 1b of the heated tobacco product 1. The tobacco rod 2 is a rod-shaped component formed by wrapping a tobacco filler 21, which includes tobacco shreds and an aerosol-source material, with wrapping paper 22 such that the wrapping paper 22 covers the lateral face of the tobacco filler 21. In Embodiment 1, a tobacco raw material included in the tobacco filler 21 may include one or more kinds of the following materials: tobacco shreds; tobacco granules; and a reconstituted tobacco material. In Embodiment 1, the tobacco filler 21 is a reconstituted tobacco material. For example, the reconstituted tobacco material may be in the form of a reconstituted tobacco sheet shredded into small pieces or pulverized into a granular or powder form, or may be such a reconstituted tobacco sheet folded up without being shredded. The reconstituted tobacco sheet is formed by, for example, adding a binder, a gelling agent, a crosslinking agent, a flavor, a viscosity modifier, or other additives to homogenized tobacco, followed by kneading the resulting mixture into a sheet form by a suitable method. The homogenized tobacco is a tobacco material obtained by pulverizing or grinding leaf tobacco, dried tobacco leaves, shredded tobacco, expanded tobacco, reconstituted tobacco, and other tobacco materials, and then mixing the resulting tobacco materials together. The reconstituted tobacco sheet may be a reconstituted tobacco sheet formed by a suitable method, for example, a slurry method, a paper-making method, or a rolling method, such as a reconstituted-tobacco slurry sheet (reconstituted-tobacco cast sheet), a reconstituted tobacco sheet obtained by a paper-making process, or a reconstituted-tobacco rolled sheet. For example, the reconstituted tobacco slurry sheet is a reconstituted tobacco slurry sheet manufactured by drying and dehydrating a reconstituted tobacco slurry spread on a flat plate. The reconstituted tobacco sheet obtained by a paper-making process is a reconstituted tobacco sheet manufactured by a paper-making process by blending a reconstituted tobacco slurry with pulp (cellulose fibers). The rolled reconstituted tobacco sheet is a reconstituted tobacco sheet manufactured by rolling a reconstituted tobacco slurry with a roller or other device into a sheet form, and then drying the resulting slurry.

The aerosol-source material included in the tobacco filler 21 is a substance that releases volatile substances upon volatilization that, when cooled, form an aerosol. The aerosol-source material is not limited to any particular kind of aerosol-source material, but any suitable substance extracted from various natural products can be selected in accordance with the intended use. Suitable examples of aerosol-source materials may include glycerin, propylene glycol, triacetin, 1, 3-butanediol, and a mixture thereof. The tobacco filler 21 may include a flavor. The kind of the flavor is not particularly limited.

The support part 4 is a segment located near the front end of the filter 3. The support part 4 is located immediately downstream of the tobacco rod 2, and disposed in abutting contact with the rear end of the tobacco rod 2. The support part 4 may be in the form of, for example, a hollow cellulose acetate tube. In other words, the support part 4 may be obtained by forming a center hole at the center of the cross-section of a cylindrical cellulose acetate fiber bundle such that the center hole penetrates the fiber bundle. Alternatively, the support part 4 may be in the form of, for example, a paper filter filled with cellulose fibers, or a paper tube. Any paper tube with a certain thickness can be effectively used to serve as the support part 4. The support part 4 is a segment provided to ensure that, when an electric heater of a heating device for which the heated tobacco product 1 is to be used is inserted into the tobacco rod 2, the support part 4 prevents the tobacco filler 21 from being pushed downstream within the heated tobacco product 1 toward the cooling part 5. The support part 4 also serves as a spacer for spacing the cooling part 5 of the heated tobacco product 1 away from the tobacco rod 2.

The cooling part 5 is located immediately downstream of the support part 4, and disposed in abutting contact with the rear end of the support part 4. During use of the heated tobacco product 1, volatile substances released from the tobacco rod 2 (tobacco filler 21) flow downstream along the cooling part 5. As the volatile substances released from the tobacco rod 2 (tobacco filler 21) are cooled by the cooling part 5, the volatile substances form an aerosol that is to be inhaled by the user. In the example depicted in Fig. 1, the cooling part 5 is formed by a hollow paper tube with an air vent 5a through which outside air can be introduced. However, the cooling part 5 may not include the air vent 5a. The cooling part 5 may have a heat-absorbing agent positioned not to obstruct the flow of volatile substances or aerosol. For example, the cooling part 5 may be formed by a filter material having a large number of channels (through-holes) extending in the longitudinal direction (axial direction) of the filter 3.

The mouthpiece part 6 is a segment located near the rear end of the filter 3, that is, near the mouth end 1a. The mouthpiece part 6 may be located immediately downstream of the cooling part 5, and disposed in abutting contact with the rear end of the cooling part 5. In the example depicted in Fig. 1, the mouthpiece part 6 may include, for example, a filter material made of cellulose acetate fibers formed into the shape of a circular cylinder. The mouthpiece part 6 may be a center hole filter, or a paper filter filled with cellulose fibers, or may be a paper tube including no filtering medium. The mouthpiece part 6 may be formed by any one of the following components: a solid filter material having a filtering medium; a center hole filter; a paper filter; and a paper tube including no filtering medium. Alternatively, the mouthpiece part 6 may be formed by selectively combining these components.

Fig. 2 illustrates the tobacco rod 2 of the heated tobacco product 1 in detail. As illustrated in Fig. 2, a distal end face 2a of the tobacco rod 2 (tobacco filler 21) has a heater-insertion cavity 23 into which the heater of the heating device is to be inserted. In the example depicted in Fig. 2, the heater-insertion cavity 23 is in the form of a non-through recess (cavity) extending in the axial direction of the tobacco rod 2 (tobacco filler 21). Alternatively, however, the heater-insertion cavity 23 may be in the form of a cavity that axially penetrates the tobacco rod 2 (tobacco filler 21). Although the heater-insertion cavity 23 is depicted in Fig. 2 as having the shape of a tapered circular cone that progressively decreases in diameter from the distal end face 2a of the tobacco rod 2 (tobacco filler 21) toward the rear end, the heater-insertion cavity 23 may have the shape of a tapered circular cone frustum that progressively decreases in diameter from the distal end face 2a toward the rear end. The heater-insertion cavity 23 is not limited to any particular shape. The heater-insertion cavity 23 may have a shape other than a circular cone or a circular cone frustum, for example, a circular cylinder. Reference sign CL1 in Fig. 2 represents the central axis of the tobacco rod 2. The heater-insertion cavity 23 may be coaxial with the central axis CL1 of the tobacco rod 2.

The heater-insertion cavity 23 of the tobacco rod 2 (tobacco filler 21) preferably has a diameter of greater than or equal to 1 mm and less than or equal to 4 mm at a first end 23a, which is located near the distal end face 2a of the tobacco rod 2, and has a diameter of greater than 0 mm and less than or equal to 0.5 mm at a second end 23b, which is located opposite to the distal end face 2a. The heater-insertion cavity 23 preferably has a diameter at the first end 23a located near the distal end face 2a of the tobacco rod 2 that is greater than or equal to 10% and less than or equal to 80% of the diameter of the tobacco rod 2, and has a diameter at the second end 23b that is greater than or equal to 0% and less than or equal to 10% of the diameter of the tobacco rod 2.

As illustrated in Fig. 2, a coating layer 24 is provided around (beside) the heater-insertion cavity 23 of the tobacco rod 2 (tobacco filler 21). The coating layer 24 is a hardened layer provided to bind tobacco shreds contained in the tobacco filler 21 together to thereby prevent or inhibit the heater-insertion cavity 23 of the tobacco rod 2 (tobacco filler 21) from closing. In this regard, the tobacco filler 21 constituting the tobacco rod 2 is an elastic body rather than a plastic body. This means that in forming the heater-insertion cavity 23 in the tobacco rod 2, simply boring the heater-insertion cavity 23 from the distal end face 2a of the tobacco rod 2 may potentially have a problem described below. That is, immediately after the boring, the tobacco filler 21 begins to elastically deform in a direction that causes the heater-insertion cavity 23 to close (in a direction that causes the heater-insertion cavity 23 to decrease in cross-section). This may cause, for example, the heater-insertion cavity 23 of the tobacco rod 2 to eventually close if the heated tobacco product 1 is left in storage for an extended period of time. Embodiment 1 addresses this by providing the coating layer 24 around the heater-insertion cavity 23 of the tobacco rod 2 (tobacco filler 21) to prevent or inhibit closing of the heater-insertion cavity 23.

The coating layer 24 can be formed by adding, to the tobacco filler 21, a coating agent used to prevent or inhibit deformation of the tobacco rod 2 in a direction that causes the heater-insertion cavity 23 to close. Various materials can be used as the coating agent. Suitable examples include the following substances that may be used either singly or in combination as a mixture: calcium carbonate; sodium silicate; agar; gelatin; CMC; PVA; EVA; pectin; karaya gum; gellan gum; Cyamopsis gum; Gum arabic; xanthan gum; corn starch; sodium alginate; polyurethane; polyamide; hydroxyl-containing compounds; dextrin or dextrin derivatives; hydroxypropyl cellulose; hydroxyethyl cellulose; hydroxypropyl methylcellulose; methyl cellulose; konnyaku; collagen; inulin; soy protein; whey protein; casein; wheat gluten; carrageenin; alginate; propylene glycol alginate; pullulan; curdlan; carob gum; tara gum; tragacanth gum; zein; plantain seeds; chitin; chitosan; acacia gum; polyvinyl pyrrolidone; and polyethylene oxide.

In this regard, an aqueous solution containing calcium carbonate, or an aqueous solution containing sodium silicate (water glass) is preferably used as the coating agent from, for example, the following viewpoints: ease of handling of the coating agent; reduced risk of adhesion of the tobacco filler 21 to the electric heater upon insertion of the electric heater into the heater-insertion cavity 23; heat resistance; and flavor/smoke taste generated upon heating with the heater.

Although the amount of coating agent to be added per tobacco rod is not particularly limited, in one exemplary implementation, the coating agent is added in an amount within a range of greater than or equal to 5 mg and less than or equal to 60 mg. That is, in one exemplary implementation, the coating layer 24 of the tobacco rod 2 includes a coating agent in an amount of greater than or equal to 5 mg and less than or equal to 60 mg. Specifically, the amount of coating agent to be added can be determined in accordance with the diameter or length of the tobacco filler 21 contained in the tobacco rod 2, the filling density/physical properties of tobacco shreds to be included in the tobacco filler 21, or other factors. In one exemplary implementation, the coating layer 24 of the tobacco rod 2 covers greater than or equal to 30% and less than or equal to 100% of the wall (surface) of the heater-insertion cavity 23. In another implementation, the coating layer 24 of the tobacco rod 2 preferably covers greater than or equal to 50% and less than or equal to 100% of the wall of the heater-insertion cavity 23, and further preferably covers greater than or equal to 60% and less than or equal to 100% of the wall of the heater-insertion cavity 23. It is to be noted, however, that advantageous effects of the coating layer 24 described later can be obtained in a sufficient manner if the coating layer 24 covers greater than or equal to 30% and less than or equal to 100% of the wall of the heater-insertion cavity 23.

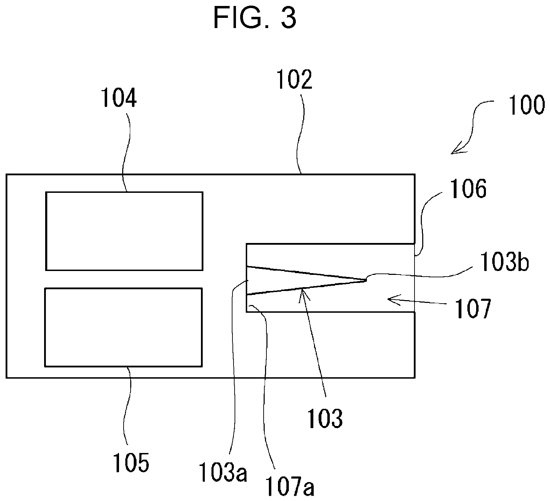

Fig. 3 is a schematic diagram of a heating device 100 for which the heated tobacco product 1 according to Embodiment 1 is to be used. The heating device 100 has a housing 102 to accommodate various components. An electric heater 103, a controller (control unit) 104, a power supply 105, and other components are accommodated within the housing 102. The housing 102 has an accommodating cavity 107 including an opening 106 through which to insert the tobacco rod 2 of the heated tobacco product 1. The accommodating cavity 107 is a cavity having a cylindrical shape and capable of accommodating the tobacco rod 2.

As illustrated in Fig. 3, the electric heater 103 is disposed within the accommodating cavity 107. The electric heater 103 has the shape of a circular cone. The electric heater 103 is disposed such that the electric heater 103 protrudes perpendicularly toward the opening 106 from the central part of a bottom portion 107a of the accommodating cavity 107. The electric heater 103 gradually tapers down from a proximal end portion 103a toward a distal end portion 103b. The central axis of the electric heater 103 is coaxial with the central axis of the accommodating cavity 107. The electric heater 103 is not limited to any particular type of electric heater. Suitable examples may include an electric heater with heating wires (e.g., nichrome, iron-chrome, or iron-nickel heating wires) disposed all around a steel material, or a ceramic heater.

The heated tobacco product 1 configured as described above includes the heater-insertion cavity 23 provided in the tobacco rod 2 (tobacco filler 21). Accordingly, in attaching the tobacco rod 2 into the accommodating cavity 107 of the heating device 100, the electric heater 103 is inserted into the heater-insertion cavity 23 of the tobacco rod 2 (tobacco filler 21). As a result, the resistance encountered during the insertion of the electric heater 103 into the tobacco filler 21 can be reduced. This configuration helps to improve the usability in attaching the tobacco rod 2 to the heating device 100 (in inserting the electric heater 103 into the tobacco rod 2). The above-mentioned configuration also helps to, in inserting the electric heater 103 into the tobacco rod 2, prevent or inhibit damage to the electric heater 103 such as fracture or bending, or bucking deformation of the tobacco rod 2. Further, the above-mentioned configuration helps to, in attaching the tobacco rod 2 into the accommodating cavity 107 of the heating device 100, prevent or inhibit the tobacco filler 21 of the tobacco rod 2 from being pushed toward the mouth end.

In Embodiment 1, the heater-insertion cavity 23 of the tobacco rod 2 (tobacco filler 21) has the shape of a circular cone. This suitably ensures tight contact between the tobacco filler 21, which laterally surrounds the heater-insertion cavity 23, and the electric heater 103 upon insertion of the electric heater 103 into the heater-insertion cavity 23. This leads to improved heat conduction from the electric heater 103 to the tobacco filler 21. Further, the above-mentioned configuration also ensures that, in withdrawing the tobacco rod 2 of the heated tobacco product 1 from the accommodating cavity 107 of the heating device 100 after use of the heated tobacco product 1, the friction between the electric heater 103 and the tobacco filler 21 is small, and thus the tobacco filler 21 is less likely to drop off. Furthermore, the above-mentioned configuration also helps to reduce the chances of seizing of the tobacco filler 21 during use. This results in reduced chances of the tobacco filler 21 dropping off as the tobacco rod 2 is withdrawn from the accommodating cavity 107 of the heating device 100 after use.

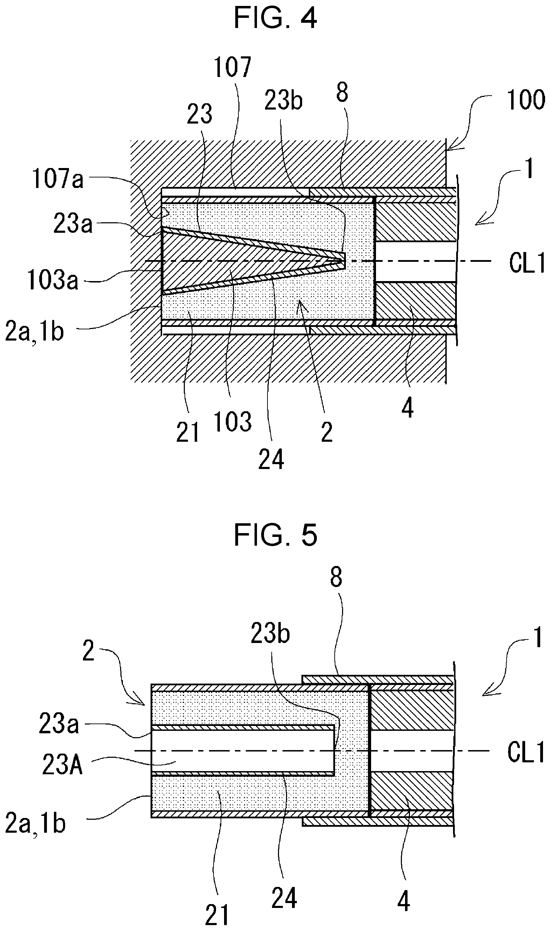

The heater-insertion cavity 23 of the tobacco rod 2 (tobacco filler 21) according to Embodiment 1 may have a cross-sectional area orthogonal to the central axis CL1 of the tobacco rod 2 that is smaller than the cross-sectional area at corresponding opposed locations of the electric heater 103 inserted into the tobacco rod 2 to a specified depth. Fig. 4 illustrates the electric heater 103 inserted into the tobacco rod 2 to a specified depth as the tobacco rod 2 is attached into the accommodating cavity 107 of the heating device 100. In Embodiment 1, the heater-insertion cavity 23 has a diameter (cross-sectional area) that is set within a range of greater than or equal to 70% and less than or equal to 99% of the diameter (cross-sectional area) at corresponding opposed locations of the electric heater 103 inserted into the tobacco rod 2 to a specified depth. The term "corresponding opposed locations" as used herein refers to locations where, with the electric heater 103 inserted into the tobacco rod 2 to a specified depth, the electric heater 103 and the heater-insertion cavity 23 are opposed to each other.

As described above, the heater-insertion cavity 23 of the tobacco rod 2 (tobacco filler 21) according to Embodiment 1 has a cross-sectional area smaller than the cross-sectional area at corresponding locations of the electric heater 103 of the heating device 100 for which the heated tobacco product 1 is to be used. In this case, during insertion of the electric heater 103 into the heater-insertion cavity 23, the electric heater 103 forces the heater-insertion cavity 23 to spread apart as the electric heater 103 is inserted into the heater-insertion cavity 23. This further ensures tight contact between the tobacco filler 21, which laterally surrounds the heater-insertion cavity 23, and the electric heater 103, leading to improved heat conduction from the electric heater 103 to the tobacco filler 21.

The heated tobacco product 1 according to Embodiment 1 includes the coating layer 24 provided around the heater-insertion cavity 23 of the tobacco rod 2 (tobacco filler 21). The presence of the coating layer 24 makes it possible to form a support that binds together tobacco shreds contained in the tobacco filler 21 that exists around the heater-insertion cavity 23. This helps to ensure that, during manufacture of the heated tobacco product 1, the tobacco filler 21 can be prevented or inhibited from elastically deforming in a direction that causes the heater-insertion cavity 23 to close (in a direction that causes the heater-insertion cavity 23 to decrease in cross-section), after boring is performed to create the heater-insertion cavity 23 by inserting a boring needle into the tobacco rod 2 from the distal end face 2a. This makes it possible to prevent or inhibit the heater-insertion cavity 23 of the tobacco rod 2 from closing with the passage of time even if the heated tobacco product 1 is left in storage for an extended period of time.

### <First Modification>

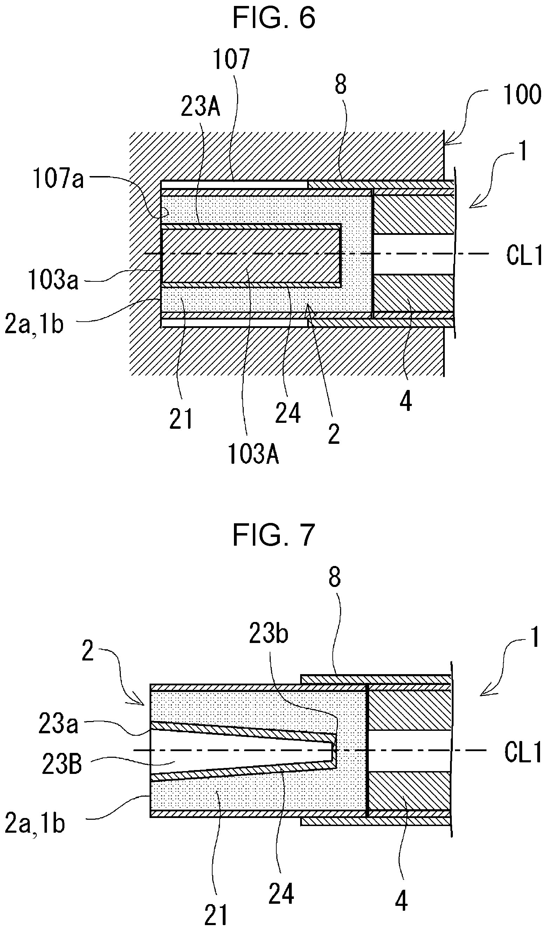

Fig. 5 illustrates the tobacco rod 2 (tobacco filler 21) according to a first modification. The tobacco rod 2 according to the first modification has a heater-insertion cavity 23A in the shape of a circular cylinder with a diameter that is constant along the central axis CL1 of the tobacco rod 2. Fig. 6 illustrates the tobacco rod 2 according to the first modification when attached into the accommodating cavity 107 of the heating device 100. Fig. 6 depicts an electric heater 103A inserted into the tobacco rod 2 to a specified depth. As with the heater-insertion cavity 23A according to the first modification, the electric heater 103A according to the first modification has the shape of a circular cylinder.

For the heater-insertion cavity 23A according to the first modification as well, the diameter of the heater-insertion cavity 23A may be set to a small value relative to the diameter (cross-sectional area) of the electric heater 103A. In this case, during insertion of the electric heater 103A into the heater-insertion cavity 23A, the electric heater 103A forces the heater-insertion cavity 23A to spread apart as the electric heater 103A is inserted into the heater-insertion cavity 23A. This allows for tight contact between the tobacco filler 21, which laterally surrounds the heater-insertion cavity 23A, and the electric heater 103A. This results in improved efficiency of heat conduction from the electric heater 103A to the tobacco filler 21.

In this regard, excessively reducing the diameter of the heater-insertion cavity 23A tends to result in increased resistance encountered during insertion of the electric heater 103A into the heater-insertion cavity 23A, whereas excessively increasing the diameter of the heater-insertion cavity 23A tends to result in poor contact upon insertion of the electric heater 103A into the heater-insertion cavity 23A. Accordingly, the diameter (cross-sectional area) of the heater-insertion cavity 23A according to the first modification is set to a value within a range of greater than or equal to 70% and less than or equal to 99% of the diameter (cross-sectional area) of the electric heater 103A. This makes it possible to meet the above-mentioned requirements regarding both the resistance encountered during insertion of the electric heater 103A, and the proper contact after the insertion. This results in both improved usability in attaching the tobacco rod 2 to the heating device 100 (in inserting the electric heater 103A into the tobacco rod 2), and improved heating efficiency in heating the tobacco filler 21 with the electric heater 103A.

Further, the heater-insertion cavity 23A according to the first modification has the shape of a circular cylinder with a constant diameter as described above. This helps to ensure that, during heating with the heater, the tobacco filler 21 around the heater-insertion cavity 23A can be sufficiently heated even at a location near the second end 23b. This makes it possible to, during heating with the heater, prevent or inhibit creation of a temperature distribution within the tobacco filler 21 along the central axis CL1. This helps to prevent or inhibit a decrease in aerosol delivery.

The heater-insertion cavity 23A according to the first modification is preferably formed in the shape of a circular cylinder with a diameter of greater than or equal to 1 mm and less than or equal to 4 mm. The heater-insertion cavity 23A preferably has a diameter that is greater than or equal to 10% and less than or equal to 80% of the diameter of the tobacco rod 2. For example, if the tobacco rod 2 has a diameter of 7 mm, the heater-insertion cavity 23A preferably has a diameter of about 2.5 mm.

### <Second Modification>

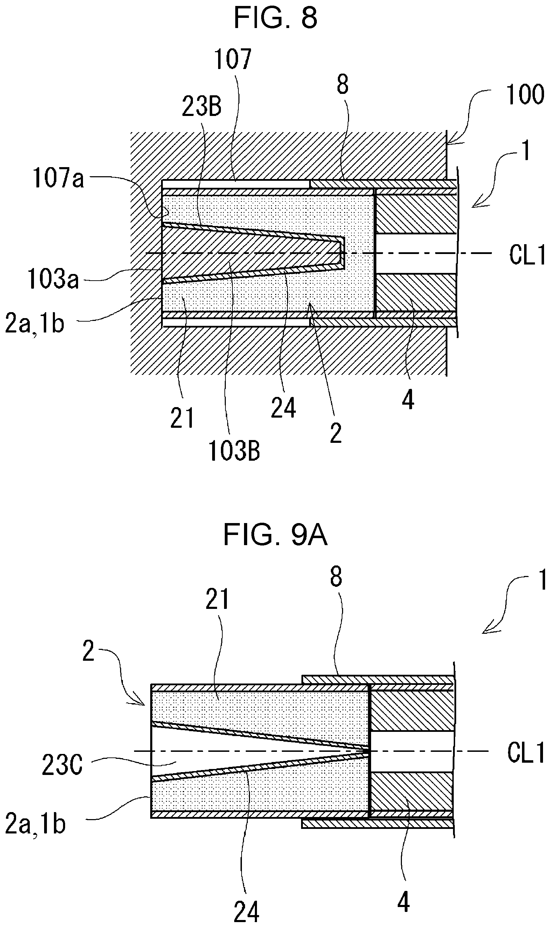

Fig. 7 illustrates the tobacco rod 2 (tobacco filler 21) according to a second modification. The tobacco rod 2 according to the second modification has a heater-insertion cavity 23B in the shape of a circular cone frustum (circular truncated cone) that tapers down along the central axis CL1 of the tobacco rod 2. Fig. 8 illustrates the tobacco rod 2 according to the second modification when attached into the accommodating cavity 107 of the heating device 100. Fig. 8 depicts an electric heater 103B inserted into the tobacco rod 2 to a specified depth. As with the heater-insertion cavity 23B according to the second modification, the electric heater 103B according to the second modification has the shape of a circular cone frustum (circular truncated cone).

For the heater-insertion cavity 23B according to second modification as well, the diameter of the heater-insertion cavity 23B may be set to a value smaller than the diameter (cross-sectional area) at corresponding opposed locations of the electric heater 103B inserted into the tobacco rod 2 to a specified depth. In this case, during insertion of the electric heater 103B into the heater-insertion cavity 23B, the electric heater 103B forces the heater-insertion cavity 23B to spread apart as the electric heater 103B is inserted into the heater-insertion cavity 23B. This allows for tight contact between the tobacco filler 21, which laterally surrounds the heater-insertion cavity 23B, and the electric heater 103B. This results in improved efficiency of heat conduction from the electric heater 103B to the tobacco filler 21.

In this regard, excessively reducing the diameter of the heater-insertion cavity 23B tends to result in increased resistance encountered during insertion of the electric heater 103B into the heater-insertion cavity 23B, whereas excessively increasing the diameter of the heater-insertion cavity 23B tends to result in poor contact upon insertion of the electric heater 103B into the heater-insertion cavity 23B. Accordingly, the heater-insertion cavity 23B according to the second modification has a diameter (cross-sectional area) that is set within a range of greater than or equal to 70% and less than or equal to 99% of the diameter (cross-sectional area) at corresponding opposed locations of the electric heater 103B inserted into the tobacco rod 2 to a specified depth. This makes it possible to meet the above-mentioned requirements regarding both the resistance encountered during insertion of the electric heater 103B into the tobacco rod 2, and the proper contact after the insertion. This results in both improved usability in attaching the tobacco rod 2 to the heating device 100 (in inserting the electric heater 103B into the tobacco rod 2), and improved heating efficiency in heating the tobacco filler 21 with the electric heater 103B.

The heater-insertion cavity 23B according to the second modification is designed to have the shape of a circular cone frustum (circular truncated cone). This makes it possible to achieve both the advantage of using the heater-insertion cavity 23 designed to have the shape of a circular cone, and the advantage of using the heater-insertion cavity 23 designed to have the shape of a circular cylinder.

That is, the heater-insertion cavity 23B according to the second modification tends to have a diameter at the second end 23b near the mouth end that is greater than the diameter of the corresponding portion of the heater-insertion cavity 23 designed to have the shape of a circular cone. This helps to ensure that during heating with the heater, a temperature distribution is less likely to occur within the tobacco filler 21 along the central axis CL1. Further, the heater-insertion cavity 23B according to the second modification has a diameter (cross-sectional area) that tapers down along the central axis CL1 of the tobacco rod 2. This makes it possible to reduce the resistance encountered during insertion of the electric heater 103B into the tobacco rod 2 and, at the same time, ensure improved contact after the insertion.

In this regard, the heater-insertion cavity 23B according to the second modification preferably has a diameter of greater than or equal to 1 mm and less than or equal to 4 mm at the first end 23a, which is located near the distal end face 2a of the tobacco rod 2, and a diameter of greater than or equal to 0.5 mm and less than or equal to 3.5 mm at the second end 23b, which is located opposite to the distal end face 2a. The heater-insertion cavity 23B preferably has a diameter at the first end 23a located near the distal end face 2a of the tobacco rod 2 that is greater than or equal to 10% and less than or equal to 80% of the diameter of the tobacco rod 2, and has a diameter at the second end 23b that is greater than or equal to 5% and less than or equal to 70% of the diameter of the tobacco rod 2.

The heater-insertion cavity 23, 23A, or 23B of the tobacco rod 2 (tobacco filler 21) according to Embodiment 1 may not necessarily have the shape of a circular cone, a circular cylinder, or a circular cone frustum as described above but may have various other shapes. Likewise, the number of heater-insertion cavities 23, 23A, or 23B to be provided in the tobacco rod 2 (tobacco filler 21) is not particularly limited. For example, the tobacco rod 2 (tobacco filler 21) may have a plurality of heater-insertion cavities 23, 23A, or 23B.

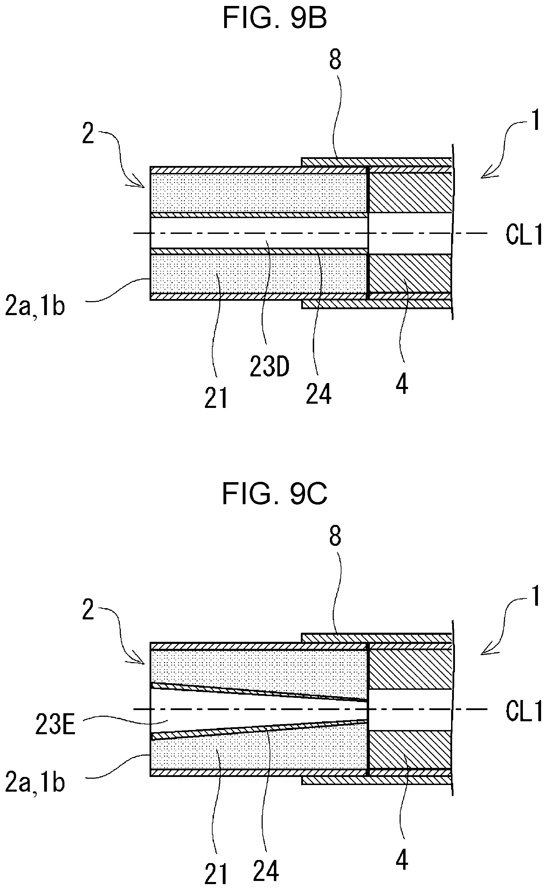

Although the foregoing description is directed to an exemplary case where the heater-insertion cavity 23, 23A, or 23B is formed as a non-through recess that does not penetrate the tobacco rod 2 along the central axis CL1 of the tobacco rod 2, the heater-insertion cavity 23, 23A, or 23B may alternatively be formed as a through-hole that penetrates the tobacco rod 2. Fig. 9A illustrates a heater-insertion cavity 23C according to a third modification. The heater-insertion cavity 23C according to the third modification is identical to the heater-insertion cavity 23 illustrated in Fig. 2, except that the heater-insertion cavity 23C has the shape of a circular cone formed as a through-hole that penetrates the tobacco rod 2. Fig. 9B illustrates a heater-insertion cavity 23D according to a fourth modification. The heater-insertion cavity 23D according to the fourth modification is identical to the heater-insertion cavity 23A illustrated in Fig. 5, except that the heater-insertion cavity 23D has the shape of a circular cylinder formed as a through-hole that penetrates the tobacco rod 2. Fig. 9C illustrates a heater-insertion cavity 23E according to a fifth modification. The heater-insertion cavity 23E according to the fifth modification is identical to the heater-insertion cavity 23B illustrated in Fig. 7, except that the heater-insertion cavity 23E has the shape of a circular cone frustum formed as a through-hole that penetrates the tobacco rod 2.

As illustrated in Figs. 9A to 9C, if the heater-insertion cavity 23C, 23D, or 23E is to be formed as a through-hole that penetrates the tobacco rod 2 along the central axis CL1 of the tobacco rod 2, the tobacco rod 2 may preferably be connected integrally to the filter 3 by means of a filter-tip attachment device after the heater-insertion cavity 23C, 23D, or 23E is formed in the tobacco rod 2. This ensures that, for example, in forming the heater-insertion cavity 23C, 23D, or 23E by use of a needle inserted through the distal end face 2a of the tobacco rod 2, even if the tobacco filler 21 is pushed out by the needle toward the mouth end, no particular problem arises if the tobacco rod 2 is connected to the filter 3 after such a situation occurs.

Forming the heater-insertion cavity 23C, 23D, or 23E as a through-hole penetrating the tobacco rod 2 as illustrated in Figs. 9A to 9C ensures that no tobacco filler 21 exists downstream of the distal end of the electric heater 103, which in turn ensures that no decrease in thermal conductivity occurs during heating with the heater. This helps to prevent or inhibit an aerosol generated during heating with the heater from being cooled to condense by a portion of the tobacco filler 21 located near the distal end of the electric heater 103. This results in increased aerosol delivery during use.

In contrast, forming the heater-insertion cavity 23, 23A, or 23B as a non-through hole that does not penetrate the tobacco rod 2 as illustrated in Figs. 2, 5, and 7 ensures that, for example, in forming the heater-insertion cavity 23, 23A, or 23B by use of a needle inserted through the distal end face 2a of the tobacco rod 2, the tobacco filler 21 of the tobacco rod 2 is not pushed out by the needle toward the mouth end. This allows the heater-insertion cavity 23, 23A, or 23B to be bored after the filter 3 is coupled to the tobacco rod 2 by means of the filter-tip attachment device. This leads to improved manufacturability.

Although embodiments of the present invention have been described above, the heated tobacco product according to the present invention is not limited to the embodiments described above.

### Reference Signs List

- 1: heated tobacco product

- 2: tobacco rod
- 3: filter
- 4: support part
- 5: cooling part
- 6: mouthpiece part
- 21: tobacco filler
- 23: heater-insertion cavity
- 24: coating layer

## Claims

1. A heated tobacco product, the heated tobacco product having a tobacco rod formed by filling a space inside wrapping paper with a tobacco filler, the tobacco filler including a tobacco raw material and an aerosol-source material, the heated tobacco product comprising:
a heater-insertion cavity that receives a heater inserted into the heater-insertion cavity, the heater being a heater of a heating device, the heater-insertion cavity being open near a distal end face of the tobacco rod and extending in an axial direction of the tobacco rod; and
a coating layer provided beside and around the heater-insertion cavity of the tobacco rod to prevent or inhibit closing of the heater-insertion cavity.

2. The heated tobacco product according to Claim 1, wherein the coating layer includes calcium carbonate or sodium silicate.

3. The heated tobacco product according to Claim 1 or 2, wherein the coating layer includes a coating agent in an amount of greater than or equal to 5 mg and less than or equal to 60 mg.

4. The heated tobacco product according to any one of Claims 1 to 3, wherein the coating layer covers greater than or equal to 30% and less than or equal to 100% of a wall of the heater-insertion cavity.

5. The heated tobacco product according to any one of Claims 1 to 4,
wherein the heated tobacco product has a filter coaxially coupled to a portion of the tobacco rod located near a proximal end of the tobacco rod, and
wherein the filter includes a cooling part to cool a volatile substance, the volatile substance being released from the aerosol-source material included in the tobacco filler.

6. The heated tobacco product according to Claim 5, wherein the filter includes a support part, the support part being disposed at a connection end of the filter to prevent or inhibit the tobacco filler from being pushed toward a mouth end of the filter upon insertion of the heater into the heater-insertion cavity, the connection end being an end connected to a portion of the tobacco rod located near the proximal end of the tobacco rod.

7. The heated tobacco product according to Claim 6, wherein the filter includes a mouthpiece part disposed near the mouth end of the filter.
